# EUROPÄISCHE PATENTANMELDUNG

(11) **EP 1 102 384 A2**
(43) Veröffentlichungstag der Anmeldung: **23.05.2001**
(21) Anmeldenummer: 00810997.7
(22) Anmeldetag: 27.10.2000
(51) Int. Cl.: H02K 15/00, H02K 17/16, H02K 1/22

(54) **Rotor für eine schnellaufende elektrische maschine**

(30) Priorität: 22.11.1999 DE 19956042
(71) Anmelder: ABB (Schweiz) AG, 5401 Baden (CH)
(72) Erfinder: Ahrens, Markus, 5406 Baden-Rütihof (CH); Prenner, Herbert, 5413 Birmenstorf (CH)
(74) Vertreter: ABB Patent Attorneys

(57) **Zusammenfassung**

Es wird ein Rotor für eine schnellaufende elektrische Maschine angegeben, der aus einem Stapel einer Mehrzahl axial aneinandergereihter dicker Massivscheiben (1) aufgebaut ist, wobei die Massivscheiben (1) an ihren Stirnflächen eine definierte Pressfläche (5) aufweisen und der Stapel im Bereich der Pressflächen (5) in axialer Richtung von Zugstäben (2) durchzogen ist. Dabei pressen die Zugstäbe (2) die Massivscheiben (1) an den Pressflächen (5) gegeneinander. Desweiteren ist zur Gewichts- und Materialeinsparung eine zentrische und an den Randbereich einer jeden Massivscheibe (1) grenzende rotationssymmetrische Ausnehmung (8) an mindestens einer Stirnfläche der Massivscheibe (1) vorgesehen.

## Beschreibung

### Technisches Gebiet

Die Erfindung bezieht sich auf das Gebiet der rotierenden elektrischen Maschinen. Sie geht aus von einem Rotor für eine schnellaufende elektrische Maschine gemäss dem Oberbegriff des unabhängigen Anspruchs.

### Stand der Technik

Elektrische schnell rotierende Maschinen, insbesondere Asynchronmaschinen weisen üblicherweise einen Rotor auf, der ein Blechpaket umfasst. Ein solcher Rotor ist in der DE 693 11 530 T2 offenbart. An jeder der beiden Stirnseiten des Blechpakets ist ein Kurzschlussring angebracht. Die Kurzschlussringe verbinden die Kurzschlussstäbe, wobei die Kurzschlussstäbe das Blechpaket in Umfangsrichtung durchziehen. Die Kurzschlussringe mit den Kurzschlussstäben bilden eine Käfigwicklung. Gemäss der DE 693 11 530 T2 ist weiterhin an den Stirnseiten des Rotors zentrisch jeweils ein Wellenstumpf angebracht, von denen wenigstens einer der Übertragung der Rotationsbewegung des Rotors beispielsweise auf eine anzutreibende Einheit dient. Jeder Wellenstumpf liegt auf dem jeweiligen Kurzschlussring auf. Desweiteren sind das Blechpaket, die Kurzschlussringe und die Wellenstümpfe gemeinsam in Umfangsrichtung von Zugstäben durchzogen. Die Zugstäbe dienen dazu, das Blechpaket zusammenzuhalten, wobei sich diese auf den Wellenstümpfen abstützen und die Kurzschlussringe gegen das Blechpaket pressen.
Die Enden der Wellenstümpfe werden in gängiger Weise von Lagern geführt und in der Regel ist eine Kupplungseinrichtung an mindestens einem Ende vorgesehen.

Problematisch bei einem Rotor gemäss der DE 693 11 530 T2 ist, dass eine hohe Axialkraft in den Zugstäben erforderlich ist, um im schnellaufenden Betrieb eine angemessene Steifigkeit des gesamten Rotors und insbesondere des Blechpakets erreichen zu können. Eine definierte Auflagefläche der einzelnen Bleche ist nicht gegeben, da die Bleche des Rotors Fertigungstoleranzen unterliegen und eine Welligkeit aufweisen, so dass beim Stapeln der Bleche ein unsymmetrischer Rotorverbund entstehen kann. Dies kann zu unrundem Lauf des Rotors im Betrieb führen und aufwendige zusätzliche Auswuchtmassnahmen zum Erreichen eines gleichmässigen Rundlaufs des Rotors zur Folge haben.

In der DE 573512 wird weiterhin ein Turbogeneratorrotor hoher Steifigkeit offenbart, der aus aneinandergereihten verschweissten Scheiben aufgebaut ist, wobei die Scheiben an den Stirnseiten mit Erhöhungen und Vertiefungen versehen sind.

Die Ausführung des Rotors gemäss der DE 573512 ist jedoch durch die notwendige Verschweissung der Scheiben aufwendig und damit teuer in seiner Herstellung. Zudem sind die Scheiben, insbesondere die Erhöhungen und Vertiefungen sehr exakt zu fertigen, damit sie genau ineinandergreifen. Dies erhöht die Herstellungskosten wesentlich.

### Darstellung der Erfindung

Aufgabe der Erfindung ist es deshalb, einen Rotor für eine schnellaufende elektrische Maschine anzugeben, der bei hohen Drehzahlen besonders steif ist und zudem sehr einfach und damit kostengünstig und wartungsfreundlich aufgebaut ist.

Diese Aufgabe wird durch die Merkmale des unabhängigen Anspruchs gelöst. Weitere vorteilhafte Ausgestaltungen der Erfindung sind in den Unteransprüchen angegeben.

Der erfindungsgemässe Rotor weist einen Stapel einer Mehrzahl aneinandergereihter dicker Massivscheiben auf, die an ihren Stirnflächen eine definierte Pressfläche aufweisen. Der Stapel ist desweiteren im Bereich und/oder nahe der Pressfläche in axialer Richtung von Zugstäben durchzogen, wobei die Zugstäbe die Massivscheiben gegeneinander pressen. Dadurch entsteht äusserst vorteilhaft ein für hohe Drehzahlen notwendiger extrem steifer Verbund des Rotors. Weiterhin weist der Rotor bei thermischen Belastungen eine ausgezeichnete Biegefestigkeit auf. Die Massivscheiben lassen sich zudem sehr leicht und kostengünstig beispielsweise durch Drehen herstellen.

Darüberhinaus befinden sich die Pressflächen vorteilhaft im wesentlichen im Randbereich und/oder nahe des Randbereiches der Stirnflächen der Massivscheiben und sind erfindungsgemäss im wesentlichen als ringförmige Flächen ausgebildet, so dass in diesem bei hohen Drehzahlen mit Fliehkräften besonders beanspruchten Bereich der Massivscheiben eine hohe Biegefestigkeit bei gleichzeitig geringen Axialkräften in den Zugstäben und somit ein besonders ruhiger Rundlauf des Rotors erreicht wird. Durch diese ausgezeichneten Rundlaufeigenschaften werden ausserdem die Wellenlager des Rotors sowie an Wellenenden des Rotors angekoppelte anzutreibende Einheiten weniger stark verschlissen.

Diese und weitere Aufgaben, Vorteile und Merkmale der vorliegenden Erfindung werden aus der nachfolgenden Beschreibung eines bevorzugten Ausführungsbeispiels der Erfindung offensichtlich.

### Kurze Beschreibung der Zeichnungen

Nachfolgend wird die Erfindung anhand eines Ausführungsbeispiels im Zusammenhang mit der Zeichnung näher erläutert.

Es zeigen
- **Fig. 1**: eine Vorderansicht im Schnitt einer Ausführungsform eines Rotors für eine schnellaufende elektrische Maschine,
- **Fig. 2**: eine zu Fig .1 alternative Ausführungsform eines Rotors für eine schnellaufende elektrische Maschine in der Vorderansicht im Schnitt,
- **Fig. 3**: ein Ausschnitt zweier nebeneinanderliegender Massivscheiben und
- **Fig. 4**: eine weitere zu Fig .1 und Fig. 2 alternative Ausführungsform eines Rotors für eine schnellaufende elektrische Maschine in der Vorderansicht im Schnitt.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

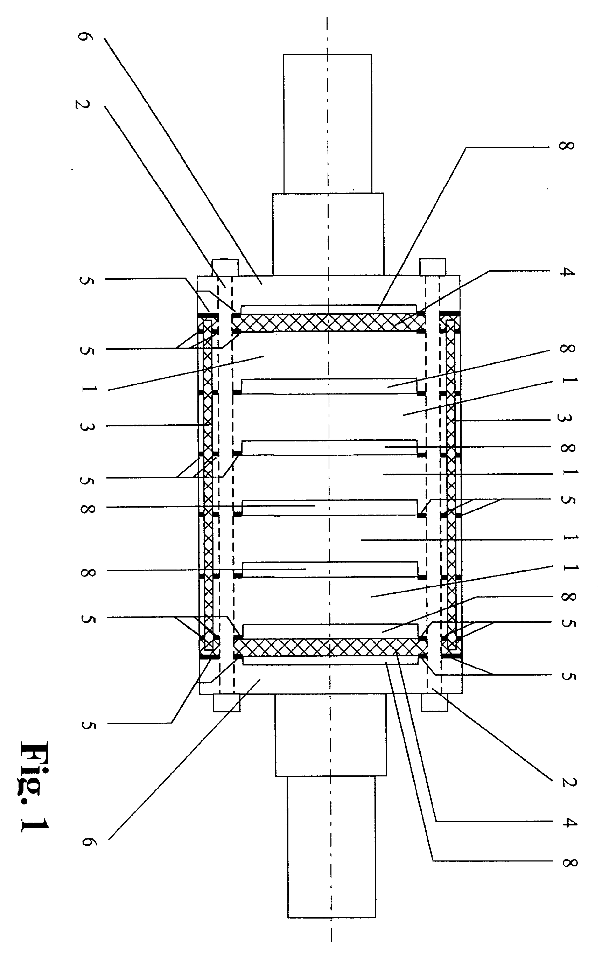

Fig. 1 zeigt eine erfindungsgemässe Ausführungsform eines Rotors einer schnellaufenden elektrischen Maschine. Der Rotor weist einen Stapel einer Mehrzahl axial aneinandergereihter dicker Massivscheiben 1 auf. Diese Massivscheiben 1 sind von Kurzschlussstäben 3 in axialer Richtung durchzogen, wobei die Kurzschlussstäbe 3 in Bezug auf die Stirnseiten des Stapels der Massivscheiben 1 in Umfangsrichtung angeordnet sind. An den Stirnseiten des Stapels ist weiterhin jeweils eine Kurzschlussscheibe 4 vorgesehen. Die Kurzschlussscheiben 4 verbinden die Kurzschlussstäbe 3 miteinander und bilden somit eine Käfigwicklung.

Es hat sich als sehr vorteilhaft erwiesen, dass die Massivscheiben 1 an ihren Stirnseiten eine definierte Pressfläche 5 aufweisen und dass der Stapel der Massivscheiben 1 im Bereich und/oder nahe dieser Pressflächen 5 in axialer Richtung von Zugstäben 2 durchzogen ist. Die Zugstäbe 2 sind in Bezug auf die Stirnseiten des Stapels in Umfangsrichtung angeordnet. Durch die Zugstäbe 2 wird erreicht, dass die Massivscheiben 1 an ihren definierten Pressflächen 5 gegeneinander gepresst werden, wodurch sich ein besonders steifer Verbund des Rotors, insbesondere bei hohen Drehzahlen, erzielen lässt. Gemäss Fig. list die definierte Pressfläche 5 der Massivscheibe 1 erfindungsgemäss im wesentlichen als ringförmige Fläche ausgebildet, wobei sich diese im wesentlichen im Randbereich und/oder nahe des Randbereiches der Stirnfläche einer jeden Massivscheibe 1 befindet. Bei geforderten hohen Drehzahlen des Rotors ist so eine hohe Biegefestigkeit, insbesondere im durch die hohen Fliehkräfte besonders beanspruchten Bereich der Massivscheiben 1, ermöglicht, die einen besonders ruhigen Rundlauf des Rotors bewirkt. Dabei reichen bereits geringe Axialkräfte in den Zugstäben 2 aus, diese Biegesteifigkeit zu erzielen. In gewünschtem Masse wird zusätzlich durch das Gegeneinanderpressen der Massivscheiben 1 an den definierten Pressflächen 5 eine gewünschte hohe Biegesteifigkeit bei thermischen Belastungen erreicht. Die Massivscheiben 1 sind zudem sehr einfach beipsielsweise durch Drehen herstellbar.

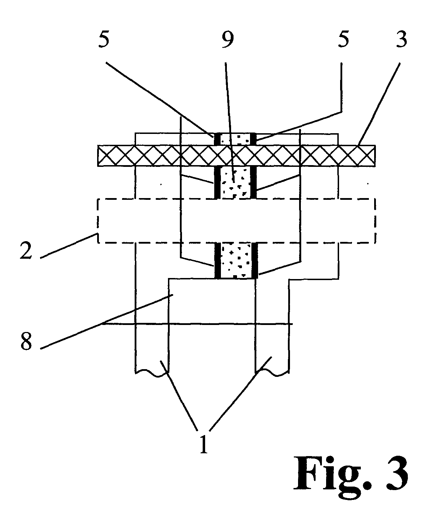

In Fig. 3 ist ein Ausschnitt zweier nebeneinanderliegender Massivscheiben 1 des erfindungsgemässen Rotors gezeigt. Zwischen jeweils zwei Massivscheiben 1 ist dabei eine Isolationsfolie 9 vorgesehen, die im wesentlichen im Bereich der Pressflächen 5 angeordnet ist. Dadurch werden die Massivscheiben 1 vorteilhaft gegeneinander isoliert und auftretende Wirbelströme und die damit verbundenen Verluste in den Massivscheiben 1 reduziert.

Gemäss Fig. 1 sind die Kurzschlussscheiben 4 ebenfalls von den Zugstäben 2 durchzogen, wobei diese in Bezug auf die Stirnseiten der Kurzschlussscheiben 4 in Umfangsrichtung angeordnet sind. Die Zugstäbe 2 dienen dabei dazu, die Kurzschlussscheiben 4 gegen den Stapel der Massivscheiben 1 zu pressen. Desweiteren ist gemäss Fig. 1 an den dem Stapel abgewandten Stirnseiten der Kurzschlussscheiben 4 jeweils ein Wellenstumpf 6 angeordnet, der ebenfalls mit den Zugstäben 2 durchzogen ist, wobei sich die Zugstäbe 2 auf den Wellenstümpfen 6 abstützen. Durch die Zugstäbe 2 werden die Wellenstümpfe 6 gegen die Kurzschlussscheiben 4 gepresst. Jeder Wellenstumpf 6 weist dazu an der der jeweiligen Kurzschlussscheibe 4 zugewandten Seite eine definierte Pressfläche 5 auf, die eine im wesentlichen ringförmige Fläche ist und die sich im wesentlichen im Randbereich und/oder nahe des Randbereiches der der jeweiligen Kurzschlussscheibe 4 zugewandten Seite befindet. Durch das Abstützen der Zugstäbe 2 auf den Wellenstümpfen 6 und das Pressen der Wellenstümpfen 6 gegen die Kurzschlussscheiben 4 wird auch an diesen Pressflächen 5 eine gewünschte hohe Biegesteifigkeit erreicht.

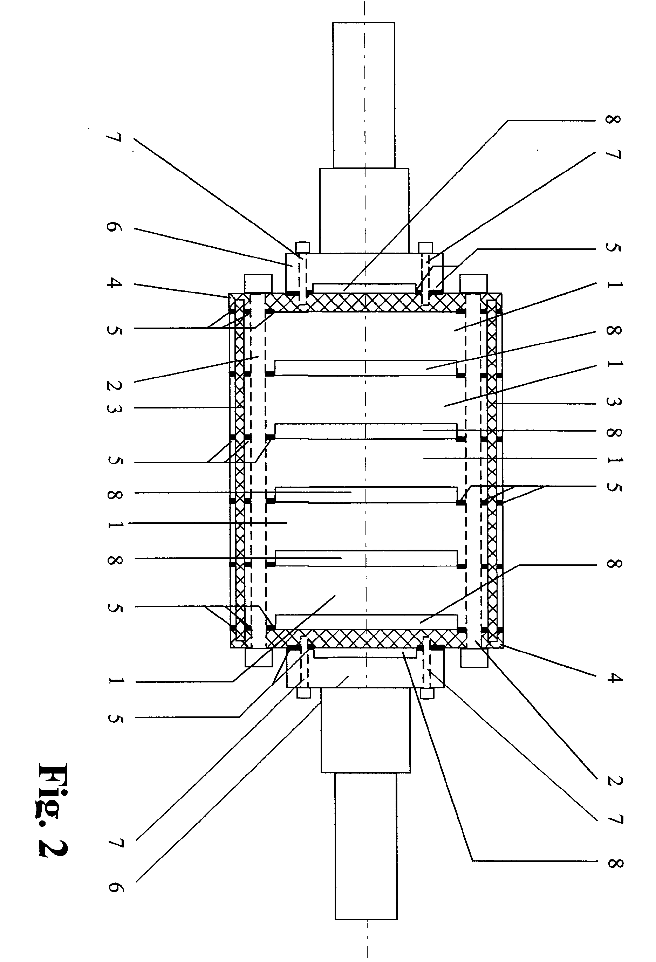

In einer in Fig. 2 dargestellten erfindungsgemässen alternativen Ausführungsform des Rotors stützen sich die Zugstäbe 2, im Unterschied zur Ausführungsform des Rotors gemäss Fig. 1, auf den Kurzschlussscheiben 4 ab. Diese durchziehen die Kurzschlussscheiben 4 in bereits beschriebener Weise. Zudem ist an den dem Stapel der Massivscheiben 1 abgewandten Stirnseiten der Kurzschlussscheiben 4, wie bereist erwähnt, jeweils ein Wellenstumpf 6 angeordnet, der aber, im Unterschied zu Fig.1, jeweils über eine Mehrzahl den Wellenstumpf 6 in axialer Richtung durchziehenden Axialbolzen 7 mit der jeweiligen Kurzschlussscheibe verbunden ist. Auch bei dieser alternativen Ausführungsform des Rotors gemäss Fig. 2 weist wie bei der in Fig. 1 dargestellten Ausführungsform jeder Wellenstumpf 6 an der der jeweiligen Kurzschlussscheibe 4 zugewandten Seite eine definierte Pressfläche 5 auf, die eine im wesentlichen ringförmige Fläche ist und die sich im wesentlichen im Randbereich und/oder nahe des Randbereiches der der jeweiligen Kurzschlussscheibe 4 zugewandten Seite befindet. Die Axialbolzen 7 dienen dazu, dass die Wellenstümpfe 6 gegen die Kurzschlussscheiben 4 gepresst werden, wobei dies an der definierten Pressfläche 5 geschieht. Mittels der Axialbolzen 7 besteht eine lösbare Verbindung zwischen den Wellenstümpfen 6 und den jeweiligen Kurzschlussscheiben 6, so dass beispielsweise bei einem allfälligen Wellenlagerwechsel nur diese Verbindung für die notwendigen Wartungsarbeiten gelöst werden muss, ohne die Zugstäbe 2 entfernen zu müssen.

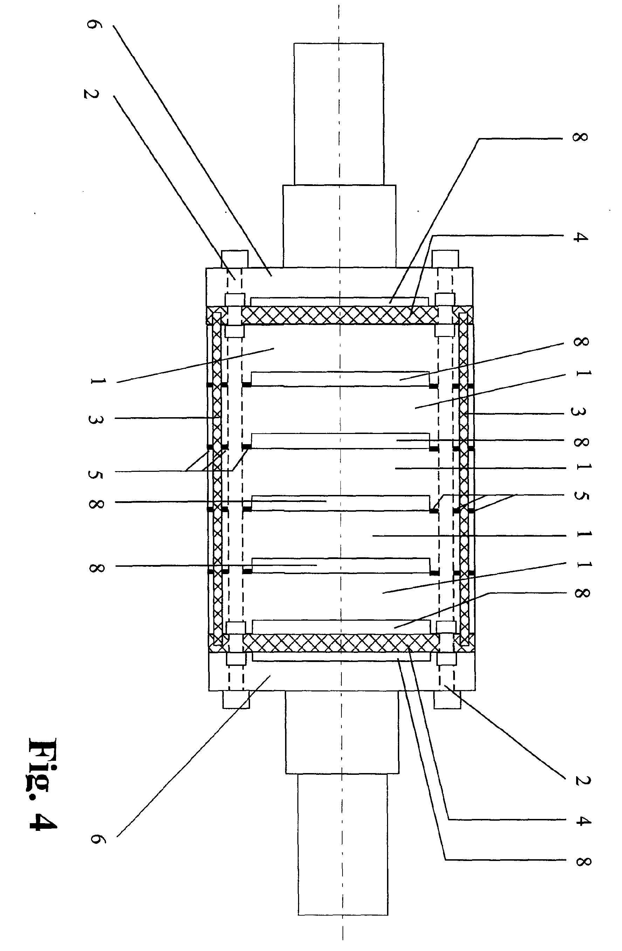

In einer weiteren erfindungsgemässen alternativen Ausführungsform des Rotors gemäss Fig. 4 stützen sich die Zugstäbe 2, im Unterschied zur Ausführungsform des Rotors gemäss Fig. 1 und Fig. 2, auf den Stirnseiten des Stapels der Massivscheiben 1 ab und pressen diese somit an den definierten Pressflächen 5 gegeneinander. Weiterhin durchziehen die Zugstäbe 2 die Kurzschlussscheiben 4 in bereits beschriebener Weise. An den dem Stapel der Massivscheiben 1 abgewandten Stirnseiten der Kurzschlussscheiben 4 ist, wie bereist erwähnt, jeweils ein Wellenstumpf 6 angeordnet. Die Wellenstümpfe 6 sind dabei wie in der Ausführungsform des Rotors gemäss Fig. 1 mit den Zugstäben 2 durchzogen sind, wobei sich die Zugstäbe 2 auf den Wellenstümpfen 6 abstützen. Die Wellenstümpfe 6 werden aber im Unterschied zur Ausführungsform des Rotors gemäss Fig. 1 und Fig. 2 nicht gegen die Kurzschlussscheiben 4 gepresst, sondern werden jeweils in sich verspannt. Die Wellenstümpfe 6 sind somit nur an den Zugstäben 2 aufgesetzt und befestigt. Durch diese Ausführungsform des Rotors gemäss Fig. 4 ist ein extrem biegesteifer Rotor angegeben, bei dem sich die Kurzschlussscheiben 4 vorteilhaft in axialer Richtung, insbesondere bei hohen thermischen Belastungen, unabhängig von den restlichen Teilen des Rotors ausdehnen können, ohne die Zugstäbe 2 wesentlich mit Zugkräften zu belasten.

Weiterhin weisen die in Fig. 1 bis Fig. 4 dargestellten Massivscheiben 1 eine Ausnehmung 8 auf, die an mindestens einer der Stirnfläche einer jeden Massivscheibe 1 zentrisch und an den Randbereich grenzend vorgesehen ist. Die Ausnehmung 8 ist vorteilhaft rotationssymmetrisch ausgebildet. Dadurch wird eine vorteilhafte Materialreduktion verbunden mit einer Gewichtsreduktion der Massivscheiben 1 erzielt. Die Biegesteifigkeit des Rotors bleibt dabei unbeeinflusst, da die Ausnehmung 8 gemäss Fig. 1 bis Fig. 4 nur an den Randbereich der Massivscheibe 1 grenzt, ohne dass die Pressfläche 5 berührt wird.

In der bevorzugten Ausführungsform des Rotors gemäss Fig. 1 und in den alternativen Ausführungsformen des Rotors gemäss Fig. 2 und Fig. 4 ist auch am Wellenstumpf 6 an der der jeweiligen Kurzschlussscheibe 4 zugewandten Seite des Wellenstumpfes 6 eine zentrische und an den Randbereich grenzende rotationssymmetrische Ausnehmung 8 vorgesehen. Mit dieser Massnahme wird zusätzlich Gewicht und Material des Rotors eingespart ohne Einbussen in der Biegesteifigkeit des Rotors zu bekommen, da, wie bereits schon erwähnt, auch hierbei der Randbereich am jeweiligen Wellenstumpf 6 unbeeinflusst bleibt. Dadurch wird der Wärmewiderstand und insbesondere der Längswärmewiderstand des gesamten Rotors vergrössert und die Erwärmung der Wellenstümpfe 6 und deren Lager gemindert.

### Bezugszeichenliste

- 1: Massivscheibe
- 2: Zugstab
- 3: Kurzschlussstab
- 4: Kurzschlussscheibe
- 5: definierte Pressfläche
- 6: Wellenstumpf
- 7: Axialbolzen
- 8: Ausnehmung
- 9: Isolationsfolie

## Patentansprüche

1. Rotor für eine schnellaufende elektrischen Maschine, der aus einem Stapel einer Mehrzahl axial aneinandergereihter dicker Massivscheiben (1) aufgebaut ist, wobei der Stapel in axialer Richtung von Kurzschlussstäben (3) durchzogen ist, die an ihren Enden miteinander verbunden sind, dadurch gekennzeichnet,
dass die Massivscheiben (1) an ihren Stirnflächen eine definierte Pressfläche (5) aufweisen und dass der Stapel im Bereich und/oder nahe der Pressflächen (5) in axialer Richtung von Zugstäben (2) durchzogen ist, wobei die Zugstäbe (2) die Massivscheiben (1) an den Pressflächen (5) gegeneinander pressen.

2. Rotor nach Anspruch 1, dadurch gekennzeichnet, dass zwischen den Massivscheiben (1) eine Isolationsfolie (9) vorgesehen ist.

3. Rotor nach Anspruch 2, dadurch gekennzeichnet, dass die Isolationsfolie (9) im wesentlichen im Bereich der Pressflächen (5) angeordnet ist.

4. Rotor nach Anspruch 1, dadurch gekennzeichnet, dass an den Stirnseiten des Stapels jeweils eine Kurzschlussscheibe (4) angeordnet ist, wobei die Kurzschlussscheiben (4) die Kurzschlussstäbe (3) miteinander verbinden.

5. Rotor nach Anspruch 4, dadurch gekennzeichnet, dass die Kurzschlussscheiben (4) in axialer Richtung von den Zugstäben (2) durchzogen sind.

6. Rotor nach Anspruch 5, dadurch gekennzeichnet, dass sich die Zugstäbe (2) auf den Kurzschlussscheiben (4) abstützen, wobei die Zugstäbe (2) die Kurzschlussscheiben (4) gegen die Stirnseiten des Stapels pressen.

7. Rotor nach Anspruch 5, dadurch gekennzeichnet, dass sich die Zugstäbe (2) auf den Stirnseiten des Stapels abstützen.

8. Rotor nach Anspruch 5, dadurch gekennzeichnet, dass an den dem Stapel abgewandten Stirnseiten der Kurzschlussscheiben (4) jeweils ein Wellenstumpf (6) angeordnet ist.

9. Rotor nach Anspruch 8, dadurch gekennzeichnet, dass die Wellenstümpfe (6) in axialer Richtung von den Zugstäben (2) durchzogen sind, wobei sich die Zugstäbe (2) auf den Wellenstümpfen (6) abstützen.

10. Rotor nach Anspruch 9, dadurch gekennzeichnet, dass die Wellenstümpfe (6) an den Zugstäben aufgesetzt und befestigt sind.

11. Rotor nach Anspruch 8, dadurch gekennzeichnet, dass jeder Wellenstumpf (6) über eine Mehrzahl den Wellenstumpf (6) in axialer Richtung durchziehenden Axialbolzen (7) mit der jeweiligen Kurzschlussscheibe (4) verbunden ist, wobei die Axialbolzen (7) die Wellenstümpfe (6) gegen die Kurzschlussscheiben (4) pressen.

12. Rotor nach Anspruch 9, dadurch gekennzeichnet, dass die Zugstäbe (2) die Wellenstümpfe (6) gegen die Kurzschlussscheiben (4) pressen.

13. Rotor nach Anspruch 11 oder 12, dadurch gekennzeichnet, dass jeder Wellenstumpf (6) an der der jeweiligen Kurzschlussscheibe (4) zugewandten Seite eine definierte Pressfläche (5) aufweist.

14. Rotor nach Anspruch 1 oder 13, dadurch gekennzeichnet, dass sich die Pressfläche (5) im wesentlichen im Randbereich und/oder nahe des Randbereiches befindet.

15. Rotor nach Anspruch 14, dadurch gekennzeichnet, dass die definierte Pressfläche (5) im wesentlichen eine ringförmige Fläche ist.

16. Rotor nach Anspruch 1, dadurch gekennzeichnet, dass an mindestens einer Stirnfläche einer jeden Massivscheibe (1) eine zentrische und an den Randbereich grenzende Ausnehmung (8) vorgesehen ist.

17. Rotor nach Anspruch 8, dadurch gekennzeichnet, dass die der jeweiligen Kurzschlussscheibe (4) zugewandten Seite des Wellenstumpfes (6) eine zentrische und an den Randbereich grenzende Ausnehmung (8) aufweist.

18. Rotor nach Anspruch 16 oder 17, dadurch gekennzeichnet, dass die Ausnehmung (8) rotationssymmetrisch ist.
